# EUROPEAN PATENT APPLICATION

(11) **EP 4 803 419 A1**
(43) Date of publication of application: **09.09.2026**
(21) Application number: 25162040.7
(22) Date of filing: 06.03.2025
(51) Int. Cl.: B64C 25/40

(54) **LANDING GEAR AND AIRCRAFT WITH LANDING GEAR**

(71) Applicant: AIRBUS Operations GmbH, 21129 Hamburg (DE)
(72) Inventor: Jassmann, Gernot, 21129 Hamburg (DE)

(57) **Abstract**

In order to reduce environmental impact, the invention provides, in an embodiment, landing gear (6) for an aircraft (1), the landing gear (6) comprising a strut (8), a wheel axle (9) coupled to the strut (8), and at least one wheel (11) connected to the wheel axle (9) and a torque converter (10) coupled to the wheel axle (9) so as to drive the wheel axle (9).

## Description

The present invention relates to landing gear and an aircraft with landing gear in particular landing gear with at least one wheel, for example for an engine powered fixed wing aeroplane.

When a jet-powered aeroplane lands, various aerodynamic drag sources, such as flaps, spoilers, etc. and in some cases, aircraft thrust reversers, are used to slow the aeroplane. Once the aeroplane has landed and has sufficiently slowed down, brakes are used to slow the aeroplane further and bring it to a stop.

Landing gear is the undercarriage of an aircraft that supports the aircraft when it is not flying, allowing it to take off, land, and taxi without damage. Wheeled landing gear is commonly used for aeroplanes. The landing gear may be retractable and be folded away during flight to reduce aerodynamic drag, allowing for faster airspeeds. The landing gear commonly comprises three wheels, or wheel-sets, giving a tripod effect. For example, a commercial passenger aeroplane may include first wheel group which is positioned under the left wing, a second wheel group positioned under the right wing and a third wheel group positioned towards the front of the fuselage. The landing gear may comprise an axle in its lower part to receive the wheel(s) and the wheel(s) rotate about an axis of rotation. The landing gear may also comprise the braking system, for example a friction braking system, e.g. disc brakes.

US 2014/0151499 A1 describes a semi-levered landing gear mechanism to provide additional ground clearance for rotation of the aircraft during take-off.

It is an object of the invention to further improve the efficiency of aircraft and to reduce the environmental impact.

This is solved by the subject matter of the independent claims. Additional advantageous features are the subject matter of the dependent claims.

In an embodiment of the invention, landing gear for an aircraft is provided which comprises a strut, a wheel axle, at least one wheel connected to the wheel axle and a torque converter which is coupled to the wheel axle so as to drive the wheel axle.

The wheel axle may be coupled to a distal end of the strut. The strut may be a shock axle and comprise one or more tubes. More than one wheel may be connected to wheel axle. For example, a wheel set of two or more wheels may be connected to one end of the wheel axle, or one or two wheels may be connected to each of the opposing ends of the wheel axle. The wheel comprises a tyre supported on a wheel rim or rims.

The strut, wheel axle, at least one wheel connected to the wheel axle and the torque converter may be considered as an assembly and two or more assemblies may be provided for the landing gear of an aircraft. For example, three assemblies may be arranged on the aircraft in a tripod arrangement. The aircraft may be an aeroplane, for example a fixed wing engine-powered aeroplane.

The torque converter is a hydraulic torque converter and is coupled to the wheel axle so as to drive the wheel axle. By driving wheel axle, the torque converter accelerates the rotation of the wheel axle about its longitudinal axis and, consequently, the rotational speed of the wheel(s) or wheel set(s) connected to that axle.

This ability to drive the wheel axle by the torque converter enables new applications, either whilst the aircraft is on the ground, in other words while the landing gear is extended and the wheels (tyres) are in contact with the ground, or whilst the aircraft is in flight, in other words while the landing gear is extended from the aircraft but not in contact with ground.

The aircraft may further comprise a control unit which is configured to drive the torque converter in order that the torque converter can drive the wheel axle, causing the wheel axle, and the wheels or wheels connected to the wheel axle, to rotate.

In an embodiment, during a landing manoeuvre of the aircraft, the control unit is configured to drive the torque converter so that the torque converter causes rotation of the wheel axle and its associated wheel(s). The torque converter causes rotation of the wheel axle and the wheel(s) connected thereto after extension of the landing gear from an undercarriage of the aircraft and prior to landing of the aircraft. In particular, the control unit is configured to cause the torque converter to rotate the wheel axle and the wheel or wheels clockwise. Thus, the wheels are already in a state of rotation as the aircraft lands and the rotating wheels make contact with the ground. This embodiment has the advantage that wear of the wheels (tyres) when making contact with the ground at high-speed and during braking of the aircraft is reduced. This reduces the amount of tyre dust released into the environment.

In other embodiments, the control unit is configured to drive the torque converter whilst the aircraft on the ground and the landing gear is in contact with the ground. In an embodiment, the control unit is configured to drive the torque converter causing the torque converter to rotate the wheel axle and the wheel anticlockwise. This embodiment may be used to reverse the aircraft. This has the advantage that the use of an additional pushback machine to reverse the aircraft can be avoided.

In an alternative embodiment, the control unit is configured to drive the torque converter causing the torque converter to rotate the wheel axle and the wheel clockwise. This can be used to move the aircraft forward on the ground, e.g. during taxiing or parking.

The torque converter is coupled to one or more group consisting of a hydraulic system of the aircraft and an auxiliary drive, e.g. engine of the aircraft. This has the advantage that an additional hydraulic system exclusively for the torque converter is not required. If the torque converter is driven by an auxiliary drive of the aircraft, this has the advantage that use of the main engines to drive the torque converter, for example during reversing, is not required thereby saving fuel and reducing noise levels.

In a further embodiment of the invention, landing gear for an aircraft is provided which comprises a strut, a wheel axle, at least one wheel connected to the wheel axle and a retarder coupled to the wheel axis so as to retard the rotation of the wheel axis axle. The retarder may be a hydraulic retarder and may be used as a retarder to decelerate the aircraft during braking, for example after the aircraft lands.

The strut, wheel axle, at least one wheel connected to the wheel axle and the retarder may be considered as an assembly and two or more assemblies may be provided for the landing gear of an aircraft. For example, three assemblies may be arranged on the aircraft in a tripod arrangement.

In an embodiment, the aircraft further comprises a control unit that is configured to activate the retarder after aircraft lands in order to decelerate the rotation of the wheel axle decelerate the aircraft. The retarder may be a hydraulic retarder and may be coupled to a hydraulic system of the aircraft and, optionally, an auxiliary drive of the aircraft.

The retarder may be coupled to one or more group consisting of a hydraulic system of the aircraft and an auxiliary drive, e.g. engine of the aircraft. This has the advantage that an additional hydraulic system exclusively for the retarder is not required. The hydraulic system includes one or more hydraulic circuits which include one or more means for cooling the hydraulic fluid circulating in the hydraulic circuit(s). The means for cooling the hydraulic fluid may comprise an air cooler for directing an airstream at the outer side of the hydraulic circuit.

The aircraft may further comprise a friction brake. The friction brake may be activated at lower speeds and is used to bring the aircraft to a halt. After landing the aircraft, the retarder may be activated by the control unit to decelerate the wheel axle and wheels and to assist in the deceleration of the aircraft. Then at a threshold speed, the fiction brakes are activated to bring the aircraft to a stop. This embodiment takes advantage of the fact that the retarder works most effectively at higher speeds. The friction brake is only activated at low speeds. This reduces wear on the fiction breaks and reduces amount of brake dust generated. This reduces the environmental impact of the braking manoeuvre.

In a further embodiment, the torque converter and the retarder may be provided as a single unit, e.g. housing, or may be combined so that some elements are used in both the torque converter and the retarder. The combined torque converter/retarder provides some or all of the functions of the torque converter and some or all of the functions of the retarder alone described herein. This combined torque converter/retarder is coupled to the wheel axle so as to accelerate and retard (decelerate) the rotation of the wheel axle and rotation of the wheel or wheels that is/are coupled to the connected to the axle.

The combined torque converter/retarder comprises a rotor comprising vanes which is coupled to the wheel shaft and a stator which is connected to a housing, the stator comprising vanes. An enclosure is formed between the rotor and the stator. In a conventional torque converter, the rotor is denoted a turbine. The conventional torque converter further comprises an impeller and the stator is arranged between the turbine and the impeller in a casing.

In the retarder mode of the combined torque converter/retarder, the rotor that is coupled to the wheel shaft boosts hydraulic fluid in the stationary stator and in the enclosure. After the enclosure is full with hydraulic fluid, the speed of rotation of the rotor is decreased, thus reducing the rotational speed of the wheel axle. In the torque converter mode of the combined torque converter/retarder, the hydraulic fluid is directed to the turbine, bypassing the impeller, and causes the turbine and the wheel axle to rotate. For example, an opening may be formed in the casing through which hydraulic fluid can be directed to the turbine and bypass the impeller.

The aircraft may further comprise valves coupled to a hydraulic system of the aircraft which are controllable by a control unit. The control unit may control the valves so as to reverse the hydraulic flow direction in the combined torque converter/retarder in order to switch between the torque converter mode and the retarder mode. The valves may be part of the combined inverter/retarder. Alternatively, the valves may be located on the aircraft rather than the landing gear.

In another embodiment, the position of the vanes, e.g. the vanes of the stator, is adjusted to cause the hydraulic flow to be reversed in order to switch between the torque the mode and the retarder mode.

In an embodiment, the landing gear of the aircraft, or the aircraft further comprises a control unit that is coupled to the torque converter/retarder and which is configured to, in the torque converter mode, rotate the wheel axle clockwise after extension of the wheels from an under courage of the aircraft and prior to landing the aircraft and/or rotate wheel axle and wheel anticlockwise reverse the aircraft. The control unit is further configured to, in the retarder mode, decelerate rotation of the wheel axle and decelerate the aircraft after landing of the aircraft.

An aircraft is provided which comprises the landing gear of any one of the embodiments described herein. The aircraft may be an aeroplane.

Embodiments of the invention will now be described with reference to the drawings, in which:
Fig. 1A illustrates a schematic view of an aeroplane;
Fig. 1B illustrates a perspective view of a wheel of the aeroplane which further comprises a combined torque converter/retarder;
Fig. 1C illustrates a schematic view of a hydraulic torque converter;
Fig. 1D illustrates a schematic view of a hydraulic retarder;
Fig. 1E illustrates a schematic cross-sectional view of the operation of a combined torque converter/retarder in the retarder mode;
Fig. 1F illustrates a schematic view of the operation of a combined torque converter/retarder;
Figs 2A and 2B illustrate schematic views of apparatus for adjusting the position of a vane of a rotor or stator.
Fig. 3 illustrates a schematic view of an aeroplane with a torque converter used to reverse aeroplane, and
Fig. 4 illustrates a schematic perspective view of an aeroplane during landing.

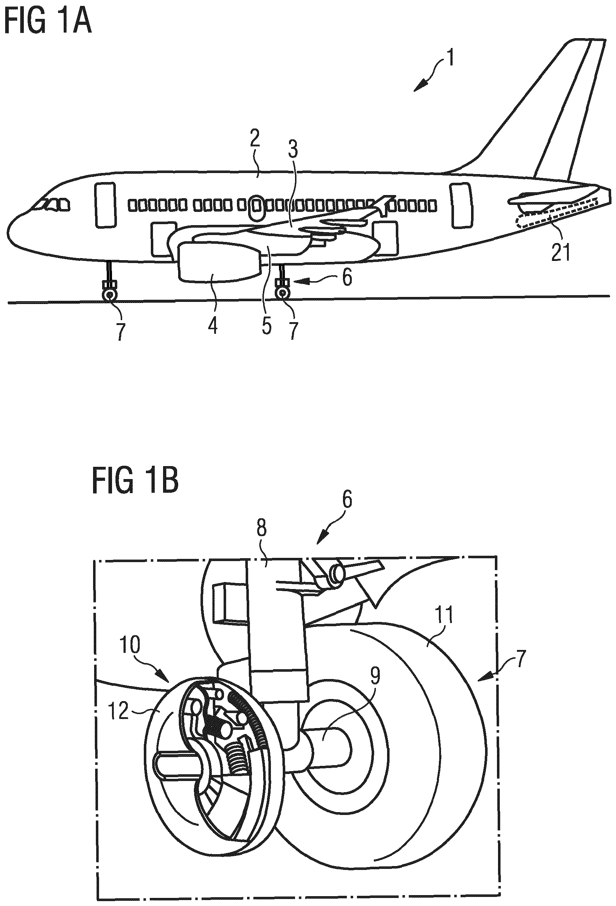

Fig. 1A illustrates a schematic view of an aircraft 1 in the form of an aeroplane. The aircraft 1 has a fuselage 2, wings 3 which extend from each of the opposing sides of the fuselage 2, at least one main engine 4 for powering the aircraft 1 to flight and at least one fuel tank 5. The aircraft 1 also comprises landing gear 6 for supporting the aircraft 1 on the ground. The landing gear 6 comprises at least one, in the illustrated embodiment, three wheel assemblies 7, one being located under each of the wings 3 and further one located towards the front of the fuselage 1. During flight, the landing gear 6 is retracted to reduce aerodynamic drag.

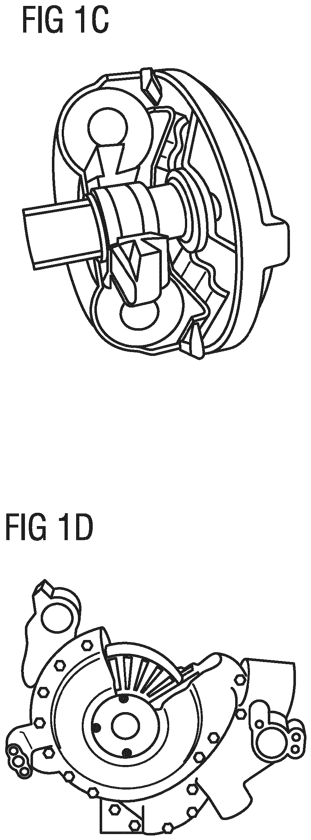

Fig. 1B illustrates a schematic view of part of one wheel assembly 7 of the landing gear 6. The landing gear 6 comprises a shock strut 8 and a wheel axle 9 that is located at the lower end of the shock strut 8. At least one wheel 11 is connected to the end of the wheel axle 9 so that rotation of the wheel axle 9 about its longitudinal axis causes the wheel or wheels 11 to rotate about the longitudinal axis. A combined torque converter/retarder 10 is coupled to the wheel axle 9. In some embodiments, a torque converter alone, for example having the structure shown in Fig. 1C, or a retarder alone, for example having the structure shown in Fig. 1D, is used in place of the combined torque converter/retarder 10 shown in Fig. 1B.

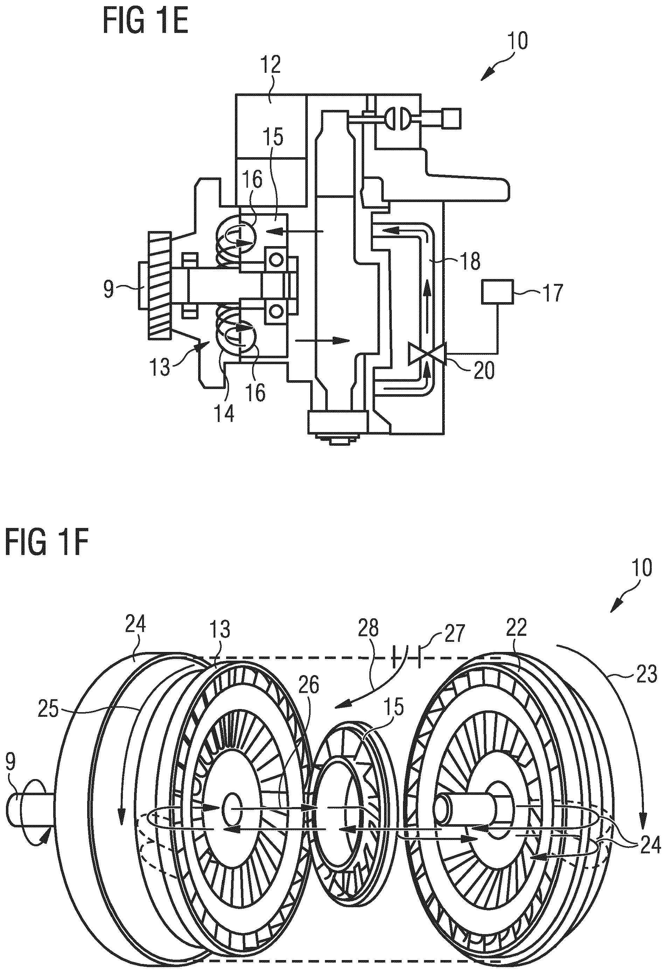

The torque converter/retarder 10 is provided within a housing 12 and comprises a rotor 13 which is coupled to the wheel axle 9 such that rotation of the rotor 13 causes the wheel axle 9 and the wheel(s) 11 to rotate. The rotor 13 comprises a plurality of vanes 14. Fig. 1E illustrates a schematic cross-sectional view of the combined torque converter/retarder 10 in the retarder mode.

The combined torque converter/retarder 10 is coupled to the wheel axle 9 and to the hydraulic system 18 of the aircraft 1. The rotor 13 is coupled to the wheel axle 9 and comprises a plurality of vanes 14. The stator 15 is attached to the housing 16 and faces towards the rotor 13 such that an enclosure 16 is formed between the stator 15 and the rotor 13.

In the retarder mode illustrated in Fig. 1E, the rotor 13 is connected and spinning synchronously with the wheel axle 9. The flow of the hydraulic fluid, e.g. oil, is indicated in Fig. 1E by the arrows and shows that in the retarder mode, the hydraulic fluid flows into the stator 15 and is boosted in the enclosure 16 by the rotating rotor 13. After the enclosure 16 is filled with the hydraulic fluid, this hydraulic fluid slows down the speed of rotation of the rotor 13, as the compressed hydraulic fluid hinders the rotation of the rotor 13. This reduces the speed of the rotor 13 and consequently the wheel axle 9 and a retarding effect is produced. The hydraulic fluid flow exits the stator 15 on one side and is directed back to the stator 15 at the other side is shown by the arrows in Fig. 1E. The braking effect provided by the retarder is frictionless as it is caused by hydrodynamic effects.

Fig. 1F illustrates a schematic view of the conventional operation of a torque converter 10. The combined torque converter/retarder 10 comprises an impeller 22 which is driven. The impeller 22, the turbine or rotor 13 and the stator 15 are located within a casing 24. The stator 15 is located between the turbine 13 and the impeller 22. The impeller 22 is rotated in the direction of arrow 23 creating pressure to move the hydraulic fluid. The centrifugal force of the spinning impeller 22 causes the hydraulic fluid to move radially outwards as shown schematically in Fig. 1F by arrow 24. The pressurised fluid from the impeller 22 is directed towards the circumference of the turbine 13 and the vanes 14 of the turbine 13 direct the fluid along the centre axis. This causes the turbine 13 to rotate in the same direction as the impeller 22 as shown by the arrow 25. The hydraulic fluid is then directed by the stator 15 from the turbine 13 to the impeller 22 along the axis of rotation is shown schematically by the arrow 26. As the fluid hits the vanes 14 of the turbine 13, which causes the turbine 13 to rotate, this rotational energy is transferred to the wheel shaft 9 which is fixed to the axle of the turbine 13.

To start rotation of the torque converter mode and drive the wheel axle 9, the impeller 22 is bypassed and the hydraulic pressure provided by the hydraulic system 18 of the aircraft is directed to the turbine 13, thus causing the turbine 13 to rotate and the wheel axle 9 to rotate. For example, an opening 27 may be formed in the casing 24 through which hydraulic fluid can be directed to the turbine 13 and bypassing the impeller 22, as shown schematically by the arrow 28.

In the retarder mode, the impeller 22 may be used as a stator in addition to the stator 15. This use of the impeller 22 as an additional stator improves the braking moment in the retarder mode.

After landing of the aircraft 1, the retarder is activated, for example by a control unit 17. The retarder acts to slow down the rotation of the rotor 13 and the wheel axle 9. When the speed of rotation of the rotor 13 is reduced to a threshold value, a non-illustrated friction brake can take over to bring the aircraft 1 to a halt. Thus, as the retarder is used for initial braking at higher speeds, the use of friction brakes at higher speed can be avoided, thus reducing the creation of heat and brake dust. By reducing the formation of brake dust by avoiding friction braking at higher speeds, any environmental impact is reduced.

The combined torque converter/retarder system 10 can be switched into the torque converter mode by reversing the direction of the hydraulic fluid flow. This may be achieved by the use of valves and/or adjusting the position of the vanes of one or both of the rotor 13 and stator 15.

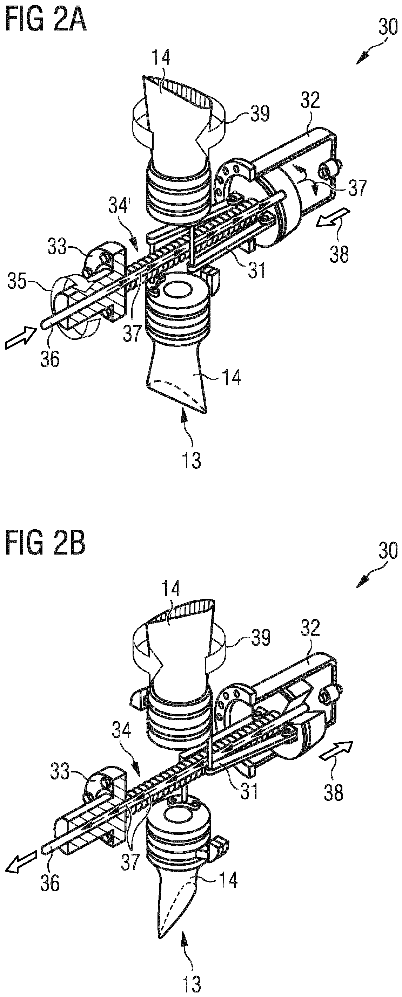

Figs 2A and 2B illustrate schematic views of a mechanism 30 for adjusting the position of the vane 14 of a rotor 13 which may be used in the combined torque converter/retarder 10. The vane 14 may be attached to linkage 31 which is in turn attached to a piston 32. The piston 32 is coupled to member 33 by a spring 34. The spring 34 is a helical spring with a longitudinal axis that extends along the longitudinal axis of the piston 32 along which the piston 32 is moved.

Referring to Fig. 2A, the member 33 may be rotated by the engine, as shown by the arrow 35. Hydraulic fluid may be pushed into a central pipe 36, which extends along the longitudinal axis through the spring 34, and into the piston 32, as shown schematically by arrows 37 in order to move the piston 32 towards the member 33 as shown by arrow 38. This causes the linkage 31 to cause the vane 14 to rotate in a clockwise direction, as shown by arrow 39, thus decreasing the pitch to a neighbouring vane.

Fig. 2B illustrates the opposing mechanism in which the hydraulic fluid is moved from the piston 32 through the pipe 36 and into the engine sump via the member 33 as shown schematically by the arrows 37. This increases the distance between the piston 32 and the member 33, as shown by arrow 38, which causes the vane 14 to rotate anticlockwise, as shown by arrow 39, and causes the pitch to increase.

The friction brake may be a multi-disc brake comprising a plurality of rotors separated by stators. The stators are coupled to pistons which are hydraulically operated. The pistons are coupled to the hydraulic system of the aircraft and hydraulic pressure is applied to the pistons causing linear movement of the pistons which forces the stators and rotors together, thus building up friction and increasing braking force.

The friction brake and the torque converter/retarder are connected to the hydraulic system 18 of the aircraft 1. The hydraulic pressure can be directed to the friction brake system and the torque converter/retarder 10, as desired, by the control unit 17. The control unit 17 controls valves of hydraulic system 18 so as to direct the hydraulic fluid to the combined torque converter/retarder 10 or to the friction brake system, if for example, the speed of the aircraft 1 falls below a threshold value. The hydraulic system 18 may also include cooling means for cooling the hydraulic fluid. For example, an air steam provided by an air cooler may be used to cool the hydraulic fluid.

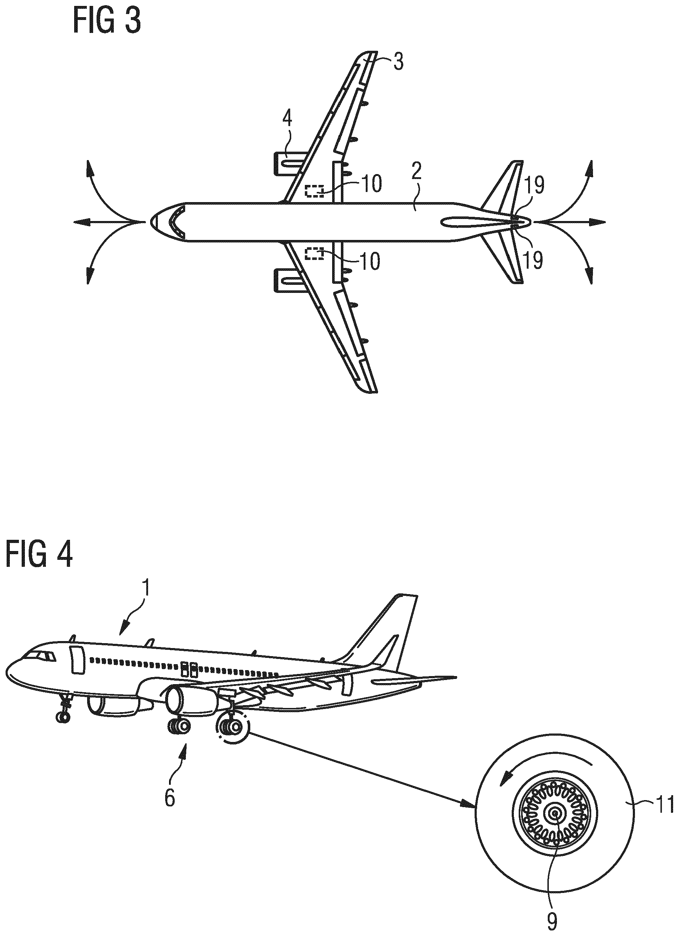

The retarder mode of the combined torque converter/retarder 10 was described with reference to Fig. 1. An application of the torque converter mode will now be described reference to Fig. 3.

Fig. 3 illustrates an application of the torque converter mode of the torque converter/retarder 10 when the aircraft 1 is on the ground. The torque converter may be used to drive the wheels 11 of the aircraft 1 so that the aircraft 1 moves. In Fig. 3, the torque converter is used to drive the wheel axle 9 and therefore, the wheels 11 attached to the wheel axle 9 in an anticlockwise direction such that the aircraft 1 is reversed. The torque converter may be drive by an auxiliary drive, e.g. engine 21 of the aircraft 1 rather than the main engine of the aircraft 1 that powers the aircraft 1 to flight. In order that the torque converter operates to drive the wheel axle, the hydraulic pressure provided by the hydraulic system 18 of the aircraft is directed to the turbine 13, bypassing the impeller 22, and causing the turbine 13 and the wheel axle 9 to rotate. For example, an opening 27 may be formed in the casing 24 through which hydraulic fluid can be directed to the rotor 13, whilst bypassing the impeller 22. This reversing of the aircraft 1 can be performed without the use of an additional pushback vehicle. This use of the torque converter/retarder 10 may be also includes the use of cameras 19 positioned on the aircraft 1 such that the cameras capture at least a view to the rear of the aircraft 1 which is displayed to the pilot in the cockpit. Further sensor devices may also be positioned on the aircraft 1 to give further information to the pilot and/or provide a safety system which may halt movement of the aircraft if it is considered to be too close to another object.

The torque converter mode may also be used to rotate the wheels 11 in the clockwise direction and drive the aircraft 1 forward on the ground. This may be useful for manoeuvring the aircraft, e.g. during parking.

Fig. 4 illustrates a further use of the torque converter mode of the torque converter/retarder 10. In this application, the torque converter mode is used to drive the wheel axle 9 and the wheels 11 in the clockwise direction whilst the aircraft 1 is in flight, for example during a landing manoeuvre. After the landing gear 6 has been extended from the undercarriage of the aircraft 1, the torque converter can be used to drive the wheel axle 9 and the wheels 11 in the clockwise direction. Thus, when the wheels 11 make contact with ground, they are already rotating. This has the advantage that friction between the wheels 11 and the ground is reduced thus reducing wear of the tyres of the wheel 11. This reduces the formation of dust and reduces environmental impact.

This torque converter mode may also be used to stabilize flight attitude due to accelerated masses.

### List of reference signs:

- 1: aircraft
- 2: fuselage
- 3: wing
- 4: main engine
- 5: fuel tank
- 6: landing gear
- 7: wheel assembly
- 8: strut
- 9: wheel axle
- 10: torque converter/retarder
- 11: wheel
- 12: housing
- 13: rotor
- 14: vane
- 15: stator
- 16: enclosure
- 17: control unit
- 18: hydraulic system
- 19: camera
- 20: valve
- 21: auxiliary drive
- 22: impeller
- 23: arrow
- 24: arrow
- 25: arrow
- 26: arrow
- 27: opening
- 28: arrow
- 30: mechanism
- 31: linkage
- 32: piston
- 33: member
- 34: spring
- 35: arrow
- 36: central pipe
- 37: arrow
- 38: arrow
- 39: arrow

## Claims

1. Landing gear (6) for an aircraft (1), the landing gear (6) comprising:
a strut (8);
a wheel axle (9) coupled to the strut (8);
at least one wheel (11) connected to the wheel axle (9);
a torque converter (10) coupled to the wheel axle (9) so as to drive the wheel axle (9).

2. Landing gear (6) according to claim 1, further comprising a control unit (17) that is coupled to the torque converter (10), wherein the control unit (17) is configured to drive the torque converter (10) so as to rotate the wheel axle (9) after extension of the landing gear (6) from an undercarriage of the aircraft (1) and prior to the landing of the aircraft (19).

3. Landing gear (6) according to claim 2, wherein the control unit (17) is configured to rotate the wheel axle (9) and the wheel (11) clockwise.

4. Landing gear (6) according to claim 2 or claim 3, wherein the control unit (17) is further configured to drive the torque converter (10) so as to rotate the wheel axle (9) and wheel (11) anticlockwise and reverse the aircraft (1).

5. Landing gear (6) according to any one of claims 1 to 4, wherein the torque converter (10) is coupled to one or more of the group consisting of a hydraulic system (18) of the aircraft (1) and an auxiliary drive (21) of the aircraft (1).

6. Landing gear (6) for an aircraft (1), the landing gear (6) comprising:
a strut (8);
a wheel axle (9) coupled to the strut (8);
at least one wheel (11) connected to the wheel axle (9);
a retarder (10) coupled to the wheel axle (9) so as to retard the rotation of the wheel axle (9).

7. Landing gear (6) according to claim 6, further comprising a control unit (17) that is configured to drive the retarder (10) after landing of the aircraft (1) and to decelerate the rotation of the wheel axle (9) and decelerate the aircraft (1).

8. Landing gear (6) according to claim 6 or claim 7, wherein the retarder (10) is a hydraulic retarder and is coupled to one or more of the group consisting of a hydraulic system (18) of the aircraft (1) and an auxiliary drive (21) of the aircraft (1).

9. Landing gear (6) for an aircraft (1), the landing gear (6) comprising:
a strut (8);
a wheel axle (9) coupled to the strut (8);
at least one wheel (11) connected to the wheel axle (9);
a combined torque converter/retarder (10) coupled to the wheel axle (9) so as to accelerate and retard rotation of the wheel axle (9).

10. Landing gear (6) according to claim 9, wherein the combined torque converter/ retarder (10) comprises:
a rotor (13) coupled to the wheel shaft (9), the rotor (13) comprising vanes (14);
a stator (15) connected to a housing (12), the stator comprising vanes
an enclosure (16) being formed between the rotor (13) and the stator (15).

11. Landing gear (6) according to claim 10, wherein in the retarder mode the rotor (13) boosts hydraulic fluid in the stationary stator (15) and enclosure (16), and after the enclosure (16) is full with hydraulic fluid, the speed of the rotor (13) decreases and reduces the rotational speed of the wheel axle (9).

12. Landing gear (6) according to any one of claims 9 to 11, wherein the torque inverter/retarder (10) further comprises at least one valve (20) coupled to a hydraulic system (18) of the aircraft (1) in order to reverse the hydraulic flow direction, in order to switch between the torque converter mode and the retarder mode.

13. Landing gear (6) according to any one of claims 9 to 12, wherein the position of the vanes of the stator (15) is adjusted to cause the hydraulic flow direction to be reversed, in order to switch between the torque converter mode and the retarder mode.

14. Landing gear (6) according to any one of claims 9 to 13, wherein the combined torque converter/retarder (10) further comprises a control unit /17) that is configured to, in the torque converter mode,:
rotate the wheel axle (9) and the wheel (11) clockwise after extension of the landing gear (6) from an undercarriage of the aircraft (1) and prior to the landing of the aircraft (1) and/or
rotate the wheel axle (9) and the wheel (11) anticlockwise and reverse the aircraft (1),
and the control unit (17) is configured to, in the retarder mode,:
decelerate the rotation of the wheel axle (9) and decelerate the aircraft (1) after landing of the aircraft (1).

15. An aircraft (1) comprising the landing gear (6) of any one of claims 1 to 14.
